# EUROPEAN PATENT APPLICATION

(11) **EP 4 841 126 A1**
(43) Date of publication of application: **18.11.2026**
(21) Application number: 25886392.7
(22) Date of filing: 21.08.2025
(51) Int. Cl.: F16D 65/00, F16D 55/226, B03C 3/47

(54) **CALIPER-TYPE PARTICLE DUST COLLECTOR**

(30) Priority: 01.11.2024 KR 20240153479
(71) Applicant: Korea Institute of Machinery & Materials, Daejeon 34103 (KR)
(72) Inventor: LEE, Gun Hee, Daejeon 34112 (KR); HAN, Bang Woo, Daejeon 35247 (KR); SHIN, Dong Ho, Daejeon 34103 (KR); JO, Chae Yeon, Daejeon 34103 (KR); HONG, Kee Jung, Seoul 04204 (KR); PARK, Dae Hoon, Paju-si, Gyeonggi-do 10865 (KR)
(74) Representative: Witte, Weller & Partner Patentanwälte mbB
(86) International application number: PCT/KR2025/012728
(87) International publication number: WO 2026/095285

(57) **Abstract**

An embodiment of the present invention discloses a caliper-type particle dust collector comprising: a caliper unit applying braking force to a brake disk; a first dust collecting unit which is spaced apart from the caliper unit, is able to form an electric field, and collects particles generated by friction between the brake disk and a caliper by using the formed electric field; and a second dust collecting unit which is disposed between the first dust collecting unit and the caliper unit, is able to form a magnetic field, and collects particles by using the formed magnetic field.

## Description

### Technical Field

Embodiments of the present disclosure relate to a caliper-type particle dust collection apparatus.

### Background Art

In general, fine dust generated during vehicle driving is known to be produced in large quantities not only from exhaust gases but also from tire and brake pad wear, and reducing fine dust generated by vehicles, which is one of the main sources of mobile pollution sources, is required to reduce urban fine dust.

Specifically, a braking system of a vehicle generates a braking force by a friction force produced by pressing brake pads against a brake disk that rotates together with wheels of the vehicle, and various types of dust harmful to the human body are generated due to the wear of the brake pads caused by friction between the brake disk and the brake pads during vehicle braking.

Because the size of fine dust generated by brake pad wear is very small and components of fine dust are harmful, it is known to have harmful effects on the human body, including respiratory diseases, eye diseases, and skin diseases. Therefore, the development of technology to address this issue is required.

With the recent increase in hydrogen-powered vehicles and electric vehicles, the impact of fine dust generation from exhaust gases is expected to gradually decrease. However, because hydrogen-powered vehicles and electric vehicles use the same braking method as internal combustion engine vehicles, fine dust generation from tire and brake pad wear still occurs.

Apparatuses installed around vehicle wheels to collect fine dust generated by tire and brake pad wear have been developed in the related art, and most of the apparatuses use a filter method.

However, in the case of filter-type air purification apparatuses, the inflow of air including particles is difficult due to pressure loss caused by a filter, resulting in difficulty in practically collecting fine dust after a certain period of time has elapsed. In addition, in the case of fiber filters, there are limitations in that maintenance is difficult due to the difficulty in cleaning and regenerating filters and the need for frequent replacement.

The aforementioned background technology is technical information that the inventor possessed for developing the present disclosure or acquired during the development process of the present disclosure, and may not necessarily be considered publicly known technology disclosed to the general public prior to the filing of the present disclosure.

### Disclosure of Invention

### Technical Problem

The technical problem of the present disclosure is to provide a caliper-type particle dust collection apparatus including both a first dust collector that collects particles by using an electric field and a second dust collector that collects particles by using a magnetic field, thereby effectively collecting dust particles of various sizes regardless of particle size.

In addition, it will be understood that the problems to be solved by the present disclosure and the advantages of the present disclosure may be realized by means and combinations thereof indicated in the patent claims.

### Solution to Problem

According to an aspect of the present disclosure, a caliper-type particle dust collection apparatus may include a caliper portion configured to apply a braking force to a brake disk, a first dust collector positioned to be spaced apart from the caliper portion, configured to form an electric field, and configured to collect particles generated by friction between the brake disk and the caliper portion by using the formed electric field, and a second dust collector positioned between the first dust collector and the caliper portion, configured to form a magnetic field, and configured to collect the particles by using the formed magnetic field.

According to another aspect of the present disclosure, a caliper-type particle dust collection apparatus may include a caliper portion configured to apply a braking force to a brake disk, a first dust collector positioned to be spaced apart from the caliper portion, configured to form an electric field, and configured to collect particles generated by friction between the brake disk and the caliper portion by using the formed electric field, and a third dust collector positioned between the first dust collector and the caliper portion and comprising an inertial collision portion against which the particles undergo an inertial collision.

### Advantageous Effects of Invention

A caliper-type particle dust collection apparatus according to an embodiment of the present disclosure includes both a first dust collector that collects particles by using an electric field and a second dust collector that collects particles by using a magnetic field, thereby effectively collecting dust particles of various sizes regardless of particle size.

However, the effects obtainable through the present disclosure are not limited to the above-mentioned effects, and other technical effects not mentioned will be clearly understood by those of ordinary skill in the art from the description of the present disclosure set forth below.

### Brief Description of Drawings

The following drawings attached to the present specification illustrate preferred embodiments of the present disclosure and, together with the detailed description of the present disclosure to be described below, serve to further understand the technical idea of the present disclosure, and thus, the present disclosure should not be interpreted as being limited only to the content depicted in such drawings.
FIG. 1 is a schematic diagram of a caliper-type particle dust collection apparatus according to an embodiment of the present disclosure.
FIG. 2 is a diagram of a first dust collector according to an embodiment of the present disclosure.
FIG. 3 is a diagram for explaining positions of a first dust collector and a second dust collector positioned on a brake disk.
FIG. 4 is a diagram for explaining a use state of a guide portion according to an embodiment of the present disclosure.
FIG. 5 is a diagram illustrating a state in which a guide portion is positioned at a first position, according to an embodiment of the present disclosure.
FIG. 6 is a diagram illustrating a state in which a guide portion is positioned at a second position, according to an embodiment of the present disclosure.
FIG. 7 is a block diagram for explaining a use state of a controller according to an embodiment of the present disclosure.
FIG. 8 is a diagram illustrating a graph showing a collection ratio in a first dust collector and a second dust collector according to particle size.
FIG. 9 is a schematic diagram of a caliper-type particle dust collection apparatus according to another embodiment of the present disclosure.
FIG. 10 is a diagram for explaining positions of a first dust collector and a third dust collector positioned on a brake disk.

### Best Mode for Carrying out the Invention

According to an aspect of the present disclosure, a caliper-type particle dust collection apparatus may include a caliper portion configured to apply a braking force to a brake disk, a first dust collector positioned to be spaced apart from the caliper portion, configured to form an electric field, and configured to collect particles generated by friction between the brake disk and the caliper portion by using the formed electric field, and a second dust collector positioned between the first dust collector and the caliper portion, configured to form a magnetic field, and configured to collect the particles by using the formed magnetic field.

According to some embodiments, the second dust collector may be positioned on an outer peripheral portion of the brake disk.

According to some embodiments, the second dust collector may include a magnet portion having magnetic properties.

According to some embodiments, the caliper-type particle dust collection apparatus may further include a guide portion configured to cover a space between the caliper portion and the second dust collector and provide a movement path for the particles.

According to some embodiments, the guide portion may be movable in a circumferential direction of the brake disk.

According to some embodiments, a position of the guide portion may be adjusted based on a rotational speed of the brake disk.

According to some embodiments, the guide portion may be movable from a first position covering half of an outer peripheral surface of the caliper portion or more to a second position spaced apart from the caliper portion.

According to some embodiments, the guide portion may be movable from a first position covering half of an outer peripheral surface of the caliper portion or more to a second position covering less than half of the outer peripheral surface of the caliper portion.

According to another aspect of the present disclosure, a caliper-type particle dust collection apparatus may include a caliper portion configured to apply a braking force to a brake disk, a first dust collector positioned to be spaced apart from the caliper portion, configured to form an electric field, and configured to collect particles generated by friction between the brake disk and the caliper portion by using the formed electric field, and a third dust collector positioned between the first dust collector and the caliper portion and comprising an inertial collision portion against which the particles undergo an inertial collision.

According to some embodiments, the third dust collector may be positioned on an outer peripheral portion of the brake disk.

According to some embodiments, the caliper-type particle dust collection apparatus may further include a guide portion configured to cover a space between the caliper portion and the third dust collector and provide a movement path for the particles.

According to some embodiments, the guide portion may be movable in a circumferential direction of the brake disk.

According to some embodiments, the inertial collision portion may be positioned to be spaced apart from the brake disk and be accommodatable inside the guide portion.

According to some embodiments, the guide portion may be movable between a first position and a second position, the first position being positioned to be spaced apart from the first dust collector and being capable of accommodating the third dust collector, and the second position simultaneously accommodating one side of the first dust collector and one side of the third dust collector.

According to some embodiments, the inertial collision portion may include a plurality of slits arranged sequentially in a circumferential direction of the brake disk.

Other aspects, features, and advantages not mentioned above will become apparent from the following drawings, claims, and detailed description of the present disclosure.

### Mode for the Invention

As various modifications may be applied and numerous embodiments may be implemented, particular embodiments will be illustrated in the drawings and described in detail in the written description. Effects and features of the present disclosure, and methods for achieving them will be clarified with reference to embodiments described below in detail with reference to the drawings. However, the present disclosure may have different forms and should not be construed as being limited to embodiments set forth herein.

Hereinafter, the embodiments of the present disclosure will now be described in detail with reference to the accompanying drawings. When described with reference to the drawings, identical or corresponding elements will be given the same reference numerals, and redundant description of these elements will be omitted.

In the following embodiments, it will be understood that although the terms "first" and "second" may be used to describe various elements, these elements should not be limited by these terms and these terms are only used to distinguish an element from another.

In the following embodiments, the singular forms include the plural forms unless the context clearly indicates otherwise.

In the following embodiments, it will be understood that the terms "comprise," "include," and "have" used herein specify the presence of stated features or elements, but do not preclude the presence or addition of one or more other features or elements.

In the following embodiments, it will be further understood that, when a unit, area, or element is referred to as being "on" another unit, area, or element, it may be directly or indirectly on the other unit, area, or element. That is, for example, intervening units, areas, or elements may be present.

In the following embodiments, unless the terms "connect" and "couple" clearly mean otherwise in context, the terms do not necessarily mean that two components are directly and/or fixedly connected to each other, and do not exclude the presence of another component between the two components.

When a certain embodiment may be implemented differently, a specific process order may also be performed differently from the described order. As an example, two processes which are successively described may be performed substantially simultaneously or performed in an order opposite to the order described.

Sizes of elements in the drawings may be exaggerated or reduced for convenience of description. For example, because sizes and thicknesses of elements in the drawings are arbitrarily illustrated for convenience of explanation, the following embodiments are not limited thereto.

Hereinafter, preferred embodiments will now be described in detail with reference to the accompanying drawings. When described with reference to the drawings, identical or corresponding elements will be given the same reference numerals, and redundant description of these elements will be omitted.

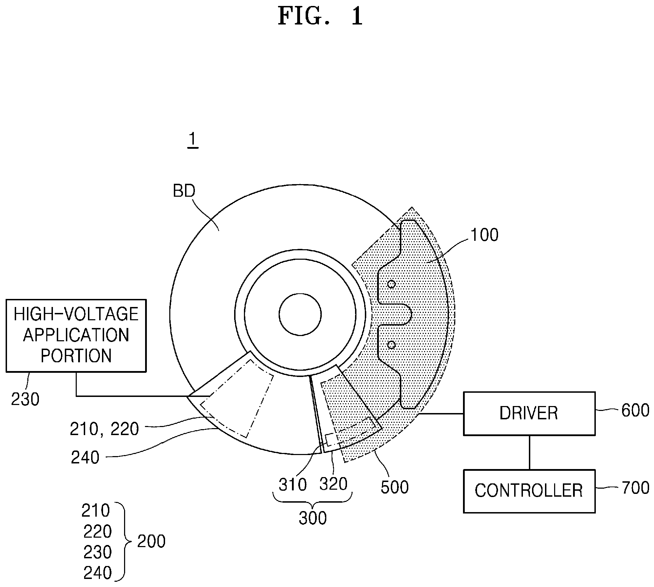

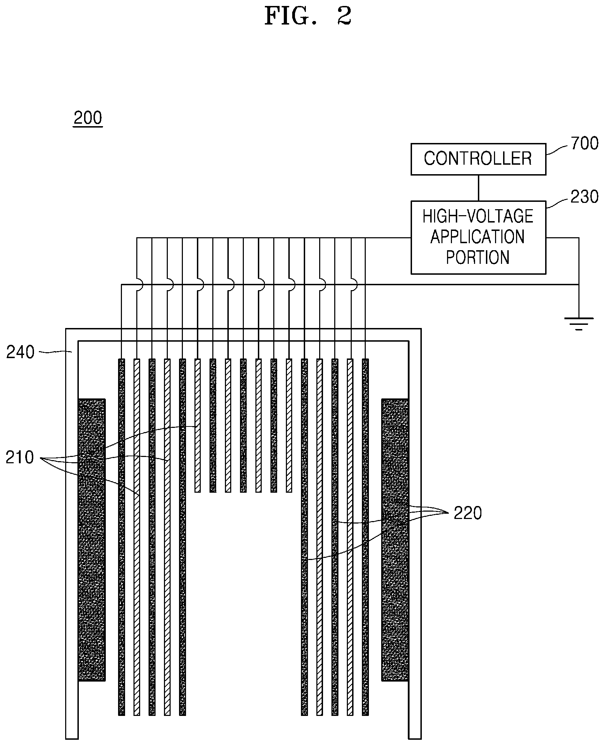

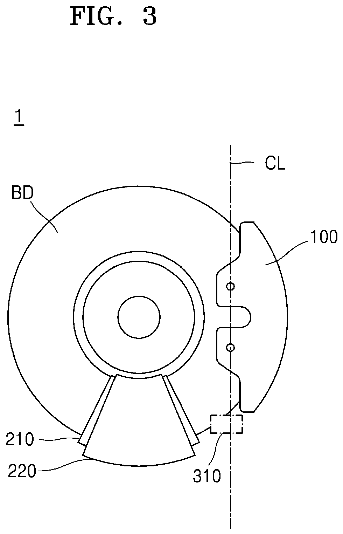

FIG. 1 is a schematic diagram of a caliper-type particle dust collection apparatus according to an embodiment of the present disclosure. FIG. 2 is a diagram of a first dust collector according to an embodiment of the present disclosure. FIG. 3 is a diagram for explaining positions of a first dust collector and a second dust collector positioned on a brake disk.

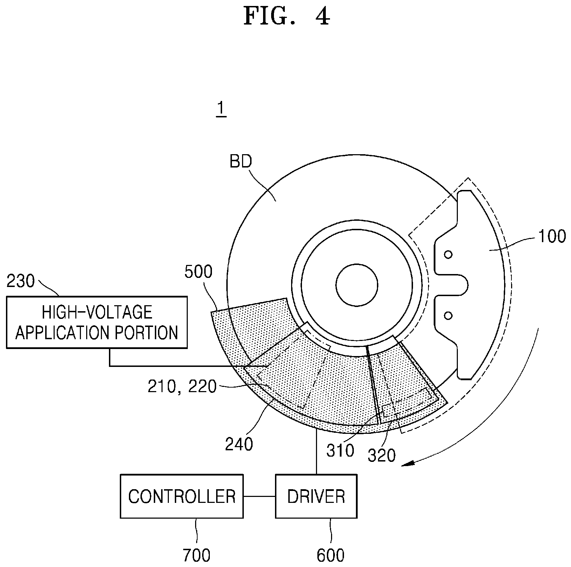

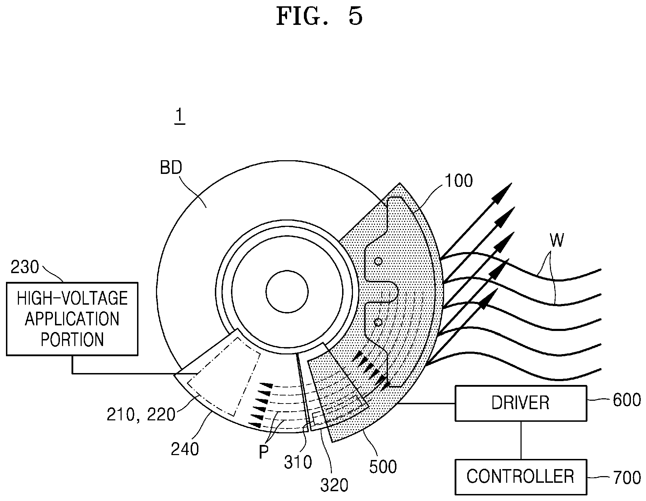

FIG. 4 is a diagram for explaining a use state of a guide portion according to an embodiment of the present disclosure. FIG. 5 is a diagram illustrating a state in which a guide portion is positioned at a first position, according to an embodiment of the present disclosure.

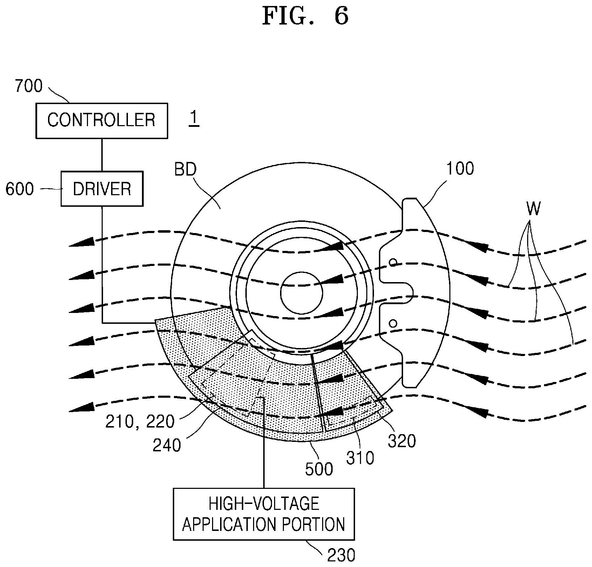

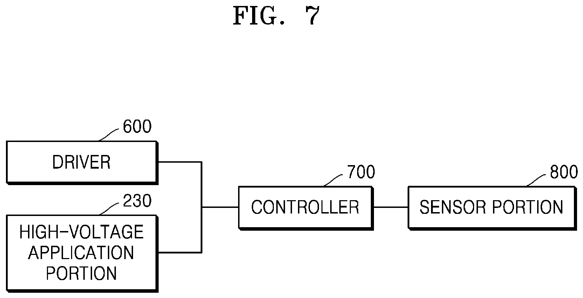

FIG. 6 is a diagram illustrating a state in which a guide portion is positioned at a second position, according to an embodiment of the present disclosure. FIG. 7 is a block diagram for explaining a use state of a controller according to an embodiment of the present disclosure.

A caliper-type particle dust collection apparatus 1 according to an embodiment of the present disclosure relates to an apparatus for collecting particles P generated by friction between a brake disk BD and a brake pad (not shown) of a caliper portion 100 during braking, in a vehicle that includes the brake disk BD and the caliper portion 100 and performs braking.

Referring to FIGS. 1 to 4, the caliper-type particle dust collection apparatus 1 (hereinafter referred to as the "particle dust collection apparatus 1") according to an embodiment of the present disclosure may include a brake disk BD, a caliper portion 100, a first dust collector 200, a second dust collector 300, a guide portion 500, a driver 600, a controller 700, and a sensor portion 800.

The brake disk BD is connected to rotate in conjunction with wheels of the vehicle. For example, when the wheels rotate, the brake disk BD may rotate integrally with the wheels.

The caliper portion 100 may apply a braking force to the brake disk BD that rotates integrally with the wheels, and when the braking force is applied to the brake disk BD, the rotational speed of the wheels rotating integrally with the brake disk BD is reduced.

The brake disk BD may constitute a braking system of the vehicle together with the caliper portion 100.

The caliper portion 100 includes a brake pad that moves by a user's operation, and the brake pad may be selectively in contact with the brake disk BD according to the user's operation to provide a friction force, thereby applying a braking force to the brake disk BD or the wheels.

Referring to FIGS. 1 and 3 to 6, the caliper portion 100 according to an embodiment of the present disclosure is positioned on one side of the brake disk BD in a circumferential direction, and a user may apply a braking force to the brake disk BD by pressing the brake pad against the brake disk BD by using a brake pedal or the like.

Referring to FIG. 1, the caliper portion 100 according to an embodiment of the present disclosure may be positioned on the front side of the vehicle.

However, the disclosure is not limited thereto, and the caliper portion 100 may be positioned at various positions within the technical concept of being able to apply a braking force to the brake disk BD on the brake disk BD.

Because the brake disk BD and the caliper portion 100 are applied in various structures to vehicle braking apparatuses of the related art, a detailed description of the internal configuration and operating principle of the brake disk BD and the caliper portion 100 will be omitted.

Referring to FIGS. 1 and 2, the first dust collector 200 according to an embodiment of the present disclosure electrostatically collects particles P generated by friction between the brake disk BD and the caliper portion 100, and may include a first dust collection plate 210, a second dust collection plate 220, a high-voltage application portion 230, and a first cover portion 240.

The particles P generated from the brake pad are charged by friction between the brake pad and the brake disk BD, and accordingly, the particle dust collection apparatus 1 according to an embodiment of the present disclosure does not need to be equipped with a separate charging apparatus for electrostatic collection.

The first dust collector 200 is positioned behind the caliper portion 100 from which the charged particles P are discharged, and the first dust collector 200 may collect the charged particles P by using a force of an electric field.

Because the particles P generated from the brake pad are discharged from the caliper portion 100 in a rotational direction of the brake disk BD, the caliper-type particle dust collection apparatus 1 may have the first dust collector 200 positioned on one side of the caliper portion 100 without a separate air flow apparatus such as a fan, thereby easily collecting the particles P.

The first dust collector 200 may be positioned to be spaced apart from the caliper portion 100, and specifically, the caliper portion 100 and the first dust collector 200 may be positioned to be spaced apart from each other in a circumferential direction of the brake disk BD.

As an optional embodiment, a plurality of first dust collectors 200 may be provided, and the plurality of first dust collectors 200 may be positioned adjacent to both ends of the caliper portion 100, respectively.

Referring to FIG. 2, the first dust collection plate 210 may receive a high voltage from the high-voltage application portion 230. In addition, the second dust collection plate 220 may be spaced apart from the first dust collection plate 210 and grounded.

The first dust collection plate 210 and the second dust collection plate 220 may be positioned to be spaced apart from each other in parallel in a thickness direction of the brake disk BD.

Referring to FIG. 2, a plurality of first dust collection plates 210 and a plurality of second dust collection plates 220 may be provided, and the plurality of first dust collection plates 210 and second dust collection plates 220 may be positioned to be spaced apart from each other so as to alternate with each other in the thickness direction of the brake disk BD.

For example, one second dust collection plate 220 may be positioned between two first dust collection plates 210, and one first dust collection plate 210 may be positioned between two second dust collection plates 220.

One surface of the first dust collection plate 210 and one surface of the second dust collection plate 220 may be parallel to the surface of the brake disk BD.

As a result, because the surface of the brake disk BD and the first dust collection plate 210 or the second dust collection plate 220 face each other in parallel, a wide area in which the particles P discharged from the surface of the brake disk BD may be attached to the first dust collection plate 210 or the second dust collection plate 220 may be secured, thereby effectively performing electrostatic collection of the particles P.

The charged particles P generated between the brake disk BD and the caliper portion 100 move toward the first dust collector 200 in the rotational direction of the brake disk BD, and the charged particles P may move into a spacing between the first dust collection plate 210 and the second dust collection plate 220.

Because the first dust collection plate 210 receives a high voltage and the second dust collection plate 220 is grounded, an electric field is formed in the spacing due to a potential difference between the first dust collection plate 210 and the second dust collection plate 220, and the charged particles P moving into the spacing may be collected by the first dust collector 200 by the electric field.

As an optional embodiment, a separately provided filter may be positioned between the first dust collection plate 210 and the second dust collection plate 220, thereby effectively collecting the particles P together with the electrostatic collection of the particles P by the electric field.

Referring to FIGS. 1, 2, and 4 to 6, the high-voltage application portion 230 according to an embodiment of the present disclosure may receive an electrical signal from the controller 700 and adjust the magnitude of a voltage applied to the first dust collection plate 210.

The controller 700 may receive information about the speed of the vehicle or the rotational speed of the brake disk BD, and control the magnitude of a voltage provided by the high-voltage application portion 230 to the first dust collection plate 210.

For example, when the speed of the vehicle or the rotational speed of the brake disk BD is greater than the preset value, the high-voltage application portion 230 may decrease the magnitude of the voltage provided to the first dust collection plate 210.

In addition, when the speed of the vehicle or the rotational speed of the brake disk BD is lower than a preset value, the high-voltage application portion 230 may increase the magnitude of the voltage provided to the first dust collection plate 210.

When the speed of the vehicle is high, the charge amount of the particles P is high due to strong friction between the brake disk BD and the caliper portion 100, and thus, even when the high-voltage application portion 230 applies a relatively weak high voltage to the first dust collection plate 210 according to a control signal from the controller 700, the particles P with a high charge amount may be easily collected by only a weak electric field generated in the first dust collector 200.

When the speed of the vehicle is low, even when the charge amount of the particles P is not high due to relatively little friction between the brake disk BD and the caliper portion 100, the high-voltage application portion 230 may apply a relatively strong high voltage to the first dust collection plate 210 according to the control signal from the controller 700 to easily collect the particles P with a low charge amount.

As a result, because the high-voltage application portion 230 may appropriately adjust the magnitude of the voltage applied to the first dust collection plate 210 according to the charge amount of the particles P, there is an effect of increasing the collection performance of the first dust collector 200 while minimizing the power consumption of the first dust collector 200.

Referring to FIGS. 1 and 4 to 6, the first cover portion 240 according to an embodiment of the present disclosure may accommodate the first dust collection plate 210 and the second dust collection plate 220 therein, and may be formed to extend in the circumferential direction of the brake disk BD.

A length by which the first cover portion 240 extends in the circumferential direction of the brake disk BD may be formed to be relatively longer than a length by which the first dust collection plate 210 and the second dust collection plate 220 extend in the circumferential direction of the brake disk BD.

As a result, because the first cover portion 240 separates the first dust collection plate 210 and the second dust collection plate 220 from an external space, a phenomenon of the particles P separating from the first dust collection plate 210 or the second dust collection plate 220 due to external factors such as wind W in a process of moving to a space in which the first dust collection plate 210 and the second dust collection plate 220 are positioned may be prevented.

The first cover portion 240 according to an embodiment of the present disclosure may be positioned to be spaced apart from the caliper portion 100.

For example, one end of the first cover portion 240 facing the caliper portion 100 and one end of the caliper portion 100 facing the first cover portion 240 may be spaced apart from each other by a preset interval, and the second dust collector 300 may be positioned between the first cover portion 240 and the caliper portion 100.

As a result, because the brake disk BD may be exposed to the outside through a spacing between the caliper portion 100 and the first cover portion 240, the brake disk BD is exposed to the outside immediately after friction with the caliper portion 100, thereby allowing the brake disk BD to be easily cooled.

The first cover portion 240 according to an embodiment of the present disclosure may be fixed in position on the brake disk BD.

For example, the first cover portion 240 may be connected with a position thereof fixed to at least one of the brake disk BD, the caliper portion 100, the first dust collection plate 210, and the second dust collection plate 220.

As a result, because the first cover portion 240 stably covers the first dust collection plate 210 and the second dust collection plate 220, the particles P flowing into the first cover portion 240 may be stably guided to flow into a space between the first dust collection plate 210 and the second dust collection plate 220.

Referring to FIGS. 1 and 4 to 6, the first cover portion 240 according to an embodiment of the present disclosure may accommodate the first dust collection plate 210 and the second dust collection plate 220 therein, and may be connected to the second dust collector 300.

For example, the first cover portion 240 may be connected to a second cover portion 320 of the second dust collector 300, and specifically, one end of the first cover portion 240 may be fixed in position to one end of the second cover portion 320.

The first cover portion 240 and the second cover portion 320 may be spaced apart from each other by a preset interval in the circumferential direction of the brake disk BD. Air may flow in between the first cover portion 240 and the second cover portion 320, thereby effectively cooling the brake disk BD positioned inside the first cover portion 240 and the second cover portion 320.

However, the disclosure is not limited thereto, and the first cover portion 240 may accommodate not only the first dust collection plate 210 and the second dust collection plate 220 but also a magnet portion 310 therein, in which case the first cover portion 240 and the second cover portion 320 may be integrally formed.

For example, the first dust collection plate 210, the second dust collection plate 220, and the magnet portion 310 may all be fixed in position inside the first cover portion 240, and specifically, the magnet portion 310 may be positioned between the caliper portion 100 and the first dust collection plate 210 in an internal area of the first cover portion 240.

Dust particles P of various sizes may be generated from the brake disk BD. Among the particles P generated from the brake disk BD, particles P having a small size or mass may be subject to a relatively small inertial force and may be quickly charged by friction with the brake pad or the like.

Accordingly, most of the particles P having a small size or mass may be discharged from the caliper portion 100 side and move in a circumferential direction along the brake disk BD, and as a result, most of the particles P having a small size or mass may move to the first dust collector 200 and be collected by the electric field of the first dust collector 200.

However, in contrast, among the particles P generated from the brake disk BD, particles P having a relatively large size or mass may be subject to a large inertial force.

In this case, most of the particles P discharged from the caliper portion 100 side may move in a radial direction of the brake disk BD due to a centrifugal force or an inertial force, and accordingly, most of the particles P having a large size or mass may be discharged to the outside of the brake disk BD before reaching the first dust collector 200, thereby reducing the collection efficiency of the particle dust collection apparatus 1.

The particle dust collection apparatus 1 according to an embodiment of the present disclosure may include the second dust collector 300 that collects particles P between the first dust collector 200 and the caliper portion 100, thereby effectively collecting particles P that are about to be discharged to the outside between the first dust collector 200 and the caliper portion 100.

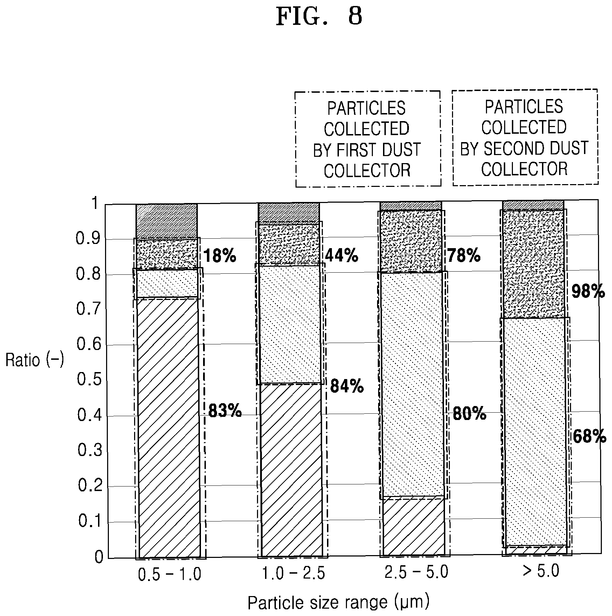

FIG. 8 is a diagram illustrating a graph showing a collection ratio in the first dust collector 200 and the second dust collector 300 according to particle size.

Specifically, FIG. 8 shows experimental results on the degree of collection in the first dust collector 200 and the second dust collector 300 according to the size of the particles P.

Referring to FIG. 8, according to the experimental results, when the size of the particles P exceeds 0.5 µm and is less than or equal to 1.0 µm, 83 % of the total particles P were collected by the first dust collector 200 that collects the particles P by using an electric field, and 18 % of the total particles P were collected by the second dust collector 300 that collects the particles P by using a magnetic field.

In addition, when the size of the particles P exceeds 1.0 µm and is less than or equal to 2.5 µm, 84 % of the total particles P were collected by the first dust collector 200 that collects the particles P by using an electric field, and 44 % of the total particles P were collected by the second dust collector 300 that collects the particles P by using a magnetic field.

In addition, when the size of the particles P exceeds 2.5 µm and is less than or equal to 5.0 µm, 80 % of the total particles P were collected by the first dust collector 200 that collects the particles P by using an electric field, and 78 % of the total particles P were collected by the second dust collector 300 that collects the particles P by using a magnetic field.

In addition, when the size of the particles P exceeds 5.0 µm, 68 % of the total particles P were collected by the first dust collector 200 that collects the particles P by using an electric field, and 98 % of the total particles P were collected by the second dust collector 300 that collects the particles P by using a magnetic field.

According to the experimental results described above, it may be seen that the larger the size of the particles P, the more advantageous a collection method using a magnetic field or a magnetic force is.

The second dust collector 300 according to an embodiment of the present disclosure was designed as a magnetic collection apparatus that is advantageous for collecting relatively large particles P, rather than an electrostatic collection method that is advantageous for collecting small particles P, based on the experimental results described above. Accordingly, the second dust collector 300 may effectively collect particles P that are about to be discharged to the outside by a centrifugal force or an inertial force between the first dust collector 200 and the caliper portion 100.

Referring to FIGS. 1 and 3 to 6, the second dust collector 300 according to an embodiment of the present disclosure collects dust particles P by using a magnetic field and may include the magnet portion 310 and the second cover portion 320.

Referring to FIGS. 1 and 3, the second dust collector 300 may be positioned between the first dust collector 200 and the caliper portion 100.

The second dust collector 300 may be positioned on an outer peripheral portion of the brake disk BD. For example, the second dust collector 300 may be positioned to face the outer side surface of the brake disk BD that is different from one surface of the brake disk BD in contact with the brake pad.

Referring to FIGS. 1 and 3, the magnet portion 310 forms a magnetic field on the outer periphery of the brake disk BD and may be positioned on the outer peripheral portion of the brake disk BD.

The magnet portion 310 may include a magnetic material, and for example, the magnet portion 310 may include a permanent magnet or an electromagnet.

The magnet portion 310 may be positioned between the first dust collector 200 and the caliper portion 100, and specifically may be positioned on the outer peripheral portion of the brake disk BD in the space between the first dust collector 200 and the caliper portion 100.

Referring to FIG. 3, the magnet portion 310 may be positioned on a preset reference axis CL.

In the present specification, the "reference axis CL" may be interpreted as a longitudinal central axis of the brake pad provided in the caliper portion 100.

For example, the "reference axis CL" may be an axis that passes through the center of an area in which the brake pad and the brake disk BD are in contact with each other and extends in a longitudinal direction of the brake pad.

Referring to FIG. 3, the magnet portion 310 may be positioned in an area in which the reference axis CL and an outer edge of the brake disk BD cross each other.

As a result, because the magnet portion 310 is positioned on a movement path of the particles P moving outward between the first and second dust collection plates 210 and 220 and the caliper portion 100, the magnet portion 310 may easily collect the particles P moving in the radial direction of the brake disk BD between the first and second dust collection plates 210 and 220 and the caliper portion 100 by using the magnetic field.

Referring to FIGS. 1 and 4 to 6, the second cover portion 320 according to an embodiment of the present disclosure may be positioned between the first dust collector 200 and the caliper portion 100, and may be positioned to be spaced apart from the caliper portion 100.

For example, one end of the second cover portion 320 facing the caliper portion 100 and one end of the caliper portion 100 facing the second cover portion 320 may be positioned to be spaced apart from each other by a preset interval.

As a result, because the brake disk BD may be exposed to the outside through the spacing between the caliper portion 100 and the second cover portion 320, the brake disk BD may be exposed to the outside immediately after friction with the caliper portion 100, thereby allowing the brake disk BD to be easily cooled.

The second cover portion 320 may be fixed in position to the first cover portion 240, and for example, the second cover portion 320 and the first cover portion 240 may be integrally formed.

As a result, particles P that were not collected by the magnet portion 310 positioned inside the second cover portion 320 may stably move to the first dust collection plate 210 or the second dust collection plate 220 without being discharged to the outside by the first cover portion 240 or the second cover portion 320.

Referring to FIGS. 4 to 7, the guide portion 500 according to an embodiment of the present disclosure provides the movement path for the particles P and may selectively cover the space between the caliper portion 100 and the first dust collector 200.

Hereinafter in the present specification, a "first position" may be interpreted as the position of the guide portion 500 positioned to cover the caliper portion 100 and a space between the caliper portion 100 and the second dust collector 300, and a "second position" may be interpreted as the position of the guide portion 500 that exposes the caliper portion 100 and the space between the caliper portion 100 and the second dust collector 300 to the outside.

However, the disclosure is not limited thereto, and the "first position" may be interpreted as the position of the guide portion 500 positioned to cover a preset area of the caliper portion 100, and the "second position" may be interpreted as the position of the guide portion 500 positioned to cover a relatively smaller area than the preset area of the caliper portion 100.

For example, when the guide portion 500 moves to the first position, the guide portion 500 may cover half of an outer peripheral surface of the caliper portion 100 or more, and when the guide portion 500 moves to the second position, the guide portion 500 may cover half of the outer peripheral surface of the caliper portion 100 or less.

Referring to FIGS. 4 to 7, the guide portion 500 may be movable in the circumferential direction of the brake disk BD.

In an embodiment, the guide portion 500 may receive an electrical signal from the controller 700 and move in the circumferential direction of the brake disk BD.

Specifically, the guide portion 500 may receive power from the driver 600 and move in the circumferential direction of the brake disk BD, and the driver 600 may receive an electrical signal from the controller 700 and adjust the position of the guide portion 500.

Referring to FIG. 3, the guide portion 500 may selectively accommodate the caliper portion 100 according to the electrical signal from the controller 700.

A width of the guide portion 500 in the thickness direction of the brake disk BD may be relatively greater than a width of the caliper portion 100 in the thickness direction of the brake disk BD and a width of the first dust collector 200 in the thickness direction of the brake disk BD.

In addition, the width of the guide portion 500 in the thickness direction of the brake disk BD may be relatively greater than a width of the second dust collector 300 in the thickness direction of the brake disk BD.

Referring to FIG. 5, the guide portion 500 may move in the circumferential direction of the brake disk BD, and when the guide portion 500 is positioned at the first position, the guide portion 500 may cover the outer peripheral surface of the caliper portion 100 and the space between the caliper portion 100 and the second dust collector 300.

Referring to FIG. 6, when the guide portion 500 is positioned at the second position, the guide portion 500 may cover an outer peripheral surface of the first dust collector 200 and an outer peripheral surface of the second dust collector 300, and at the same time, the guide portion 500 may expose the space between the caliper portion 100 and the second dust collector 300 to the outside.

Referring to FIG. 5, the guide portion 500 may receive power from the driver 600 and move to the first position to cover the outer peripheral surface of the caliper portion 100.

As a result, because the guide portion 500 separates the caliper portion 100 from an external space, the wind W directed toward the caliper portion 100 due to vehicle driving or the like may be restricted from flowing into the caliper portion 100, and accordingly, the movement path of the particles P generated inside the caliper portion 100 may be guided to flow toward the first dust collector 200 without being affected by the wind W or other factors.

Referring to FIG. 6, when the guide portion 500 receives power from the driver 600 and moves to the second position, the caliper portion 100 may be exposed to the outside.

As a result, because the wind W flows into an internal space of the caliper portion 100 or the space between the caliper portion 100 and the first dust collector 200, a contact area between the wind W and the brake disk BD may be improved, thereby increasing the cooling efficiency of the brake disk BD.

As an optional embodiment, a plurality of guide portions 500 may be provided, and the plurality of guide portions 500 may each receive power from the driver 600 and independently move in the circumferential direction of the brake disk BD.

The position of the guide portion 500 may be adjusted according to the rotational speed of the brake disk BD, the temperature of the brake disk BD, the amount of particles P generated, or the charge amount of the particles P, and a related description will be provided in detail below.

The guide portion 500 may be movably connected to one side of the first cover portion 240 or the second cover portion 320.

As a result, because the guide portion 500 moves relative to the first cover portion 240 and the second cover portion 320 that are fixed to the brake disk BD, the caliper portion 100 may be selectively covered or exposed to the outside.

As an optional embodiment, the guide portion 500 may be movably connected to one side of the caliper portion 100. As a result, because the guide portion 500 moves relative to the caliper portion 100 that is fixed to the brake disk BD, the caliper portion 100 may be selectively covered or exposed to the outside.

As an optional embodiment, the guide portion 500 may be movably connected to one side of the brake disk BD. As a result, because the guide portion 500 moves relative to the brake disk BD, the caliper portion 100 fixed to the brake disk BD may be selectively covered or exposed to the outside.

Referring to FIGS. 1 and 3, the guide portion 500 may be positioned to surround one end of the second cover portion 320 facing the caliper portion 100.

Specifically, the guide portion 500 may be positioned to surround each of one end of the second cover portion 320 facing the caliper portion 100 and one end of the caliper portion 100 facing the second cover portion 320.

As a result, because the guide portion 500 covers a space between the one end of the second cover portion 320 and the one end of the caliper portion 100, a phenomenon of the particles P generated in the caliper portion 100 escaping to the outside in a process of moving toward the magnet portion 310 may be prevented, thereby improving the particle P collection performance of the second dust collector 300.

A length by which the guide portion 500 extends in the circumferential direction of the brake disk BD may be relatively greater than or equal to a spacing distance between the one end of the second cover portion 320 and the one end of the caliper portion 100.

The length by which the guide portion 500 extends in the circumferential direction of the brake disk BD may be relatively smaller than a length by which the caliper portion 100 extends in the circumferential direction of the brake disk BD.

The length by which the guide portion 500 extends in the circumferential direction of the brake disk BD may be greater than half of the length by which the caliper portion 100 extends in the circumferential direction of the brake disk BD.

The guide portion 500 may be formed of a highly thermally conductive material having high heat dissipation performance. As a result, even when the guide portion 500 is positioned at the first position to cover the caliper portion 100, heat generated from the caliper portion 100 may be allowed to be released to the outside, thereby guiding the movement path of the particles P while securing the cooling efficiency of the brake disk BD.

Referring to FIGS. 5 to 7, the particle dust collection apparatus 1 according to an embodiment of the present disclosure may include the controller 700 capable of adjusting the position of the guide portion 500.

Specifically, the controller 700 may adjust the position of the guide portion 500 on the brake disk BD, and the controller 700 may adjust the position of the guide portion 500 by controlling the operation of the driver 600 that provides power to the guide portion 500.

The controller 700 may obtain, from the sensor portion 800 to be described below, at least one of vehicle speed information, rotational speed information of the brake disk BD, temperature information of the brake disk BD, information about the amount of particles P generated, and information about the charge amount of the particles P, and may adjust the position of the guide portion 500 by using the obtained information.

Referring to FIGS. 2, 3, and 6, the controller 700 may control the operation of the driver 600 to position the guide portion 500 at the first position such that the guide portion 500 covers the caliper portion 100.

When the speed of the vehicle is high or the brake disk BD rotates at a high speed, the controller 700 may control the operation of the driver 600 to position the guide portion 500 at the first position such that the guide portion 500 covers the caliper portion 100.

As a result, the wind W is restricted from flowing into the caliper portion 100 such that a phenomenon of the particles P escaping to the outside without flowing toward the first dust collector 200 due to the wind W may be prevented, thereby increasing the collection efficiency of the particles P.

When the amount of particles P generated between the brake disk BD and the caliper portion 100 is large, the controller 700 may control the operation of the driver 600 to position the guide portion 500 at the first position such that the guide portion 500 covers the caliper portion 100.

When the charge amount of the particles P is low, the controller 700 may control the operation of the driver 600 to position the guide portion 500 at the first position such that the guide portion 500 covers the caliper portion 100.

As a result, even when the charge amount of the particles P is low, the guide portion 500 may guide a large amount of particles P to flow toward the first dust collector 200, thereby increasing the amount of particles P collected by the first dust collector 200.

Referring to FIG. 7, the controller 700 may control the operation of the driver 600 to position the guide portion 500 at the second position such that the caliper portion 100 is exposed to the outside.

When the temperature of the brake disk BD rises to or above a preset temperature, the controller 700 may control the operation of the driver 600 to move the guide portion 500 to the second position, thereby exposing the caliper portion 100 to the outside.

As a result, the wind W is allowed to flow into the caliper portion 100, and the caliper portion 100 or the brake disk BD may be effectively cooled by the wind W.

That is, the controller 700 may obtain vehicle information from the sensor portion 800 and move the guide portion 500 to an appropriate position on the brake disk BD, thereby adjusting the collection efficiency of the particles P and the cooling efficiency of the brake disk BD according to driving conditions of the vehicle.

Referring to FIG. 7, the sensor portion 800 according to an embodiment of the present disclosure may obtain vehicle speed information, rotational speed information of the brake disk BD, temperature information of the brake disk BD, information about the amount of particles P generated, information about the charge amount of the particles P, and the like, and may transmit the obtained information to the controller 700.

As a result, the controller 700 may appropriately adjust the position of the guide portion 500 according to vehicle driving information, external environment information, and the like.

Hereinafter, a particle dust collection apparatus 1' according to another embodiment of the present disclosure will be described.

The particle dust collection apparatus 1' according to another embodiment of the present disclosure has the same configuration and operating principle as the particle dust collection apparatus 1 according to an embodiment of the present disclosure, except for including a third dust collector 400 against which particles P undergo an inertial collision, and thus, a detailed description of overlapping content will be omitted.

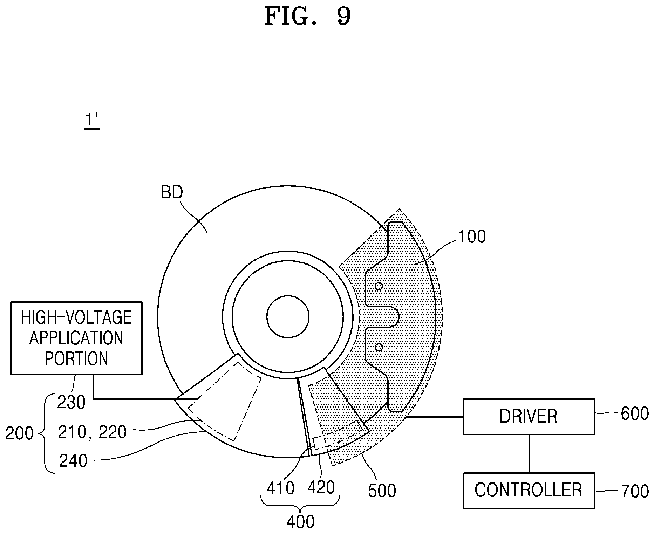

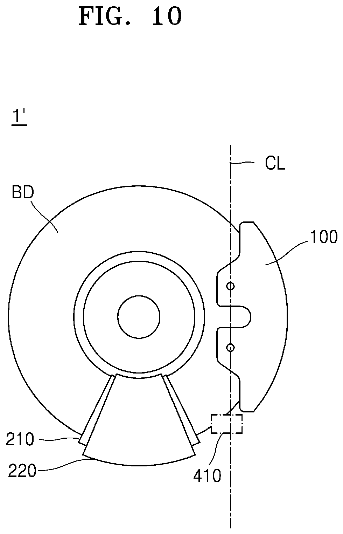

FIG. 9 is a schematic diagram of a caliper-type particle dust collection apparatus according to another embodiment of the present disclosure. FIG. 10 is a diagram for explaining positions of a first dust collector and a third dust collector positioned on a brake disk.

Referring to FIGS. 9 and 10, the particle dust collection apparatus 1' according to another embodiment of the present disclosure may include a brake disk BD, a caliper portion 100, a first dust collector 200, a third dust collector 400, a guide portion 500, a driver 600, a controller 700, and a sensor portion 800.

Because the particle dust collection apparatus 1' according to another embodiment of the present disclosure has the same configuration as the particle dust collection apparatus 1 according to an embodiment of the present disclosure, except for including the third dust collector 400, descriptions of the brake disk BD, the caliper portion 100, the first dust collector 200, the guide portion 500, the driver 600, the controller 700, and the sensor portion 800 of the particle dust collection apparatus 1' according to another embodiment of the present disclosure will be omitted.

Dust particles P of various sizes may be generated from the brake disk BD.

Among the particles P generated from the brake disk BD, particles P having a small size or mass may be subject to a relatively small inertial force and may be quickly charged by friction with the brake pad or the like.

Accordingly, most of the particles P having a small size or mass may be discharged from the caliper portion 100 side and move in the circumferential direction along the brake disk BD, and as a result, most of the particles P having a small size or mass may move to the first dust collector 200 and be collected by the electric field of the first dust collector 200.

However, in contrast, among the particles P generated from the brake disk BD, particles P having a relatively large size or mass may be subject to a large inertial force.

In this case, most of the particles P discharged from the caliper portion 100 side may move in the radial direction of the brake disk BD due to a centrifugal force or an inertial force, and accordingly, most of the particles P having a large size or mass may be discharged to the outside of the brake disk BD before reaching the first dust collector 200, thereby reducing the collection efficiency of the particle dust collection apparatus 1'.

The particle dust collection apparatus 1' according to another embodiment of the present disclosure may include the third dust collector 400 that collects particles P between the first dust collector 200 and the caliper portion 100, thereby effectively collecting particles P that are about to be discharged to the outside between the first dust collector 200 and the caliper portion 100.

Referring to FIGS. 9 and 10, the third dust collector 400 collects particles P by undergoing an inertial collision with the dust particles P and may include an inertial collision portion 410 and a third cover portion 420.

Referring to FIG. 9, the third dust collector 400 may be positioned between the first dust collector 200 and the caliper portion 100.

The third dust collector 400 may be positioned on the outer peripheral portion of the brake disk BD. For example, the third dust collector 400 may be positioned to face the outer side surface of the brake disk BD that is different from one surface of the brake disk BD in contact with the brake pad.

Referring to FIG. 10, the inertial collision portion 410 is positioned on the outer peripheral portion of the brake disk BD and may undergo an inertial collision with the particles P moving outward from the surface of the brake disk BD due to a centrifugal force.

The inertial collision portion 410 may be formed in the shape of a plate or a slit positioned on the movement path of the dust particles P.

The inertial collision portion 410 may be positioned between the first dust collector 200 and the caliper portion 100, and specifically may be positioned on the outer peripheral portion of the brake disk BD in the space between the first dust collector 200 and the caliper portion 100.

Referring to FIG. 10, the inertial collision portion 410 may be positioned on the reference axis CL, and for example, the inertial collision portion 410 may be positioned in the area in which the reference axis CL and the outer edge of the brake disk BD cross each other.

As a result, because the inertial collision portion 410 is positioned on the movement path of the particles P moving outward by a centrifugal force between the first and second dust collection plates 210 and 220 and the caliper portion 100, the inertial collision portion 410 may undergo an inertial collision with the particles P moving in the radial direction of the brake disk BD between the first and second dust collection plates 210 and 220 and the caliper portion 100, thereby effectively collecting the particles P.

The inertial collision portion 410 may be formed in the shape of a flat plate having the reference axis CL as a normal vector. However, the disclosure is not limited thereto, and the inertial collision portion 410 may be formed as a plate that forms a preset angle with the reference axis CL.

The inertial collision portion 410 may include a plurality of slits arranged sequentially in the circumferential direction of the brake disk BD. As a result, the particles P may undergo an inertial collision with the slits and be captured in the slits, and air may flow through spaces between the slits.

Referring to FIG. 9, the third cover portion 420 may be positioned between the first dust collector 200 and the caliper portion 100, and may be positioned to be spaced apart from the caliper portion 100.

For example, one end of the third cover portion 420 facing the caliper portion 100 and one end of the caliper portion 100 facing the third cover portion 420 may be positioned to be spaced apart from each other by a preset interval.

As a result, because the brake disk BD may be exposed to the outside through the spacing between the caliper portion 100 and the third cover portion 420, the brake disk BD may be exposed to the outside immediately after friction with the caliper portion 100, thereby allowing the brake disk BD to be easily cooled.

The third cover portion 420 may be fixed in position to the first cover portion 240, and for example, the third cover portion 420 and the first cover portion 240 may be integrally formed.

As a result, particles P that were not collected by the inertial collision portion 410 positioned inside the third cover portion 420 may stably move to the first dust collection plate 210 or the second dust collection plate 220 without being discharged to the outside by the first cover portion 240 or the third cover portion 420.

The caliper-type particle dust collection apparatuses 1 and 1' according to the embodiments of the present disclosure include the first dust collector 200 that collects the particles P by using an electric field and the second dust collector 300 or the third dust collector 400 that collects the particles P by using a magnetic field or an inertial collision force, thereby effectively collecting dust particles P of various sizes regardless of the size of the particles P.

The embodiments described above may be embodiments that may be implemented independently, but the structure of each embodiment may be applied in combination to other embodiments.

As described above, the present disclosure has been described with reference to the one or more embodiments shown in the accompanying drawings, but should be considered in a descriptive sense only. Those of ordinary skill in the art will understand that various modifications and equivalent embodiments may be made therefrom. Therefore, the true technical scope of protection of the present disclosure should be defined by the technical spirit of the appended claims.

Specific implementations described in the embodiments are only embodiments, and do not limit the scope of the embodiments by any means. Also, unless specifically described as "essential" or "significant", the components described in the embodiments should not be considered as necessarily required for the application of the present disclosure.

The use of the term "the" and similar referential terms in the specification of the embodiments (especially in the claims) may apply to both singular and plural forms. Also, when a range is stated in the embodiments, the disclosure encompasses inventions applied with any individual value within that range (unless stated otherwise), equivalent to explicitly listing each individual value constituting the range in the detailed description.

Finally, the operations constituting the method according to the embodiments may be performed in any appropriate order, unless the sequence is explicitly specified or otherwise indicated to be critical. The embodiments are not necessarily limited to the stated order of the operations.

In the embodiments, the use of all examples or exemplary terms is simply to describe the embodiments in detail, and unless limited by the claims, the scope of the embodiments is not limited by the examples or exemplary terms.

Also, those of ordinary skill in the art will appreciate that various modifications, combinations, and changes may be configured according to design conditions and factors within the scope of the appended claims or equivalents thereof.

### Industrial Applicability

According to an embodiment of the present disclosure, a caliper-type particle dust collection apparatus is provided. In addition, the embodiments of the present disclosure may be applied to braking apparatuses including a dust collection apparatus used in industry and the like.

## Claims

1. A caliper-type particle dust collection apparatus comprising:
a caliper portion configured to apply a braking force to a brake disk;
a first dust collector positioned to be spaced apart from the caliper portion, configured to form an electric field, and configured to collect particles generated by friction between the brake disk and the caliper portion by using the formed electric field; and
a second dust collector positioned between the first dust collector and the caliper portion, configured to form a magnetic field, and configured to collect the particles by using the formed magnetic field.

2. The caliper-type particle dust collection apparatus of claim 1, wherein the second dust collector is positioned on an outer peripheral portion of the brake disk.

3. The caliper-type particle dust collection apparatus of claim 1, wherein the second dust collector comprises a magnet portion having magnetic properties.

4. The caliper-type particle dust collection apparatus of claim 1, further comprising a guide portion configured to cover a space between the caliper portion and the second dust collector and provide a movement path for the particles.

5. The caliper-type particle dust collection apparatus of claim 4, wherein the guide portion is movable in a circumferential direction of the brake disk.

6. The caliper-type particle dust collection apparatus of claim 5, wherein a position of the guide portion is adjusted based on a rotational speed of the brake disk.

7. The caliper-type particle dust collection apparatus of claim 5, wherein the guide portion is movable from a first position covering half of an outer peripheral surface of the caliper portion or more to a second position spaced apart from the caliper portion.

8. The caliper-type particle dust collection apparatus of claim 5, wherein the guide portion is movable from a first position covering half of an outer peripheral surface of the caliper portion or more to a second position covering less than half of the outer peripheral surface of the caliper portion.

9. A caliper-type particle dust collection apparatus comprising:
a caliper portion configured to apply a braking force to a brake disk;
a first dust collector positioned to be spaced apart from the caliper portion, configured to form an electric field, and configured to collect particles generated by friction between the brake disk and the caliper portion by using the formed electric field; and
a third dust collector positioned between the first dust collector and the caliper portion and comprising an inertial collision portion against which the particles undergo an inertial collision.

10. The caliper-type particle dust collection apparatus of claim 9, wherein the third dust collector is positioned on an outer peripheral portion of the brake disk.

11. The caliper-type particle dust collection apparatus of claim 9, further comprising a guide portion configured to cover a space between the caliper portion and the third dust collector and provide a movement path for the particles.

12. The caliper-type particle dust collection apparatus of claim 11, wherein the guide portion is movable in a circumferential direction of the brake disk.

13. The caliper-type particle dust collection apparatus of claim 12, wherein the guide portion is movable between a first position and a second position, the first position being positioned to be spaced apart from the first dust collector and being capable of accommodating the third dust collector, and the second position simultaneously accommodating one side of the first dust collector and one side of the third dust collector.

14. The caliper-type particle dust collection apparatus of claim 11, wherein the inertial collision portion is positioned to be spaced apart from the brake disk and is accommodatable inside the guide portion.

15. The caliper-type particle dust collection apparatus of claim 11, wherein the inertial collision portion comprises a plurality of slits arranged sequentially in a circumferential direction of the brake disk.
